# EUROPÄISCHE PATENTANMELDUNG

(11) **EP 3 611 831 A1**
(43) Veröffentlichungstag der Anmeldung: **19.02.2020**
(21) Anmeldenummer: 18188921.3
(22) Anmeldetag: 14.08.2018
(51) Int. Cl.: H02K 15/00

(54) **VERFAHREN ZUM HERSTELLEN EINES ROTORS FÜR EINE ASYNCHRONMASCHINE, ROTOR SOWIE ASYNCHRONMASCHINE**

(71) Anmelder: Siemens Aktiengesellschaft, 80333 München (DE)
(72) Erfinder: Buschbeck, Jörg, 90482 Nürnberg (DE); Rieger, Gotthard, 80636 München (DE); Schuh, Carsten, 85598 Baldham (DE); Soller, Thomas, 94469 Deggendorf (DE); Vollmer, Rolf, 36129 Gersfeld (DE)

(57) **Zusammenfassung**

Die Erfindung betrifft ein Verfahren zum Herstellen eines Rotors (5) für eine Asynchronmaschine (1) mit den Schritten: Herstellen einer Mehrzahl von Blechelementen (7) aus einem weichmagnetischen Material, wobei die jeweiligen Blechelemente (7) Nuten (8) aufweisen, Verbinden der Blechelemente (7) zu einem Paket (6) und Bereitstellen einer Mehrzahl von Leitern (9) aus einem elektrisch leitfähigen Material, wobei die Leiter (9) in den Nuten (8) der Blechelemente (7) angeordnet werden, wobei die Blechelemente (7) mittels eines Druckverfahrens aus einer ersten Suspension, welche das weichmagnetische Material umfasst, hergestellt werden und zum Bereitstellen der Leiter (9) in die jeweiligen Nuten (8) der Blechelemente (7) ein Leiterelement (10) eingebracht wird, wobei die jeweiligen Leiterelemente (10) mittels eines Druckverfahrens aus einer zweiten Suspension, welche das elektrisch leitfähige Material umfasst, hergestellt werden.

## Beschreibung

Das Interesse richtet sich vorliegend auf Asynchronmaschinen, welche bekanntermaßen einen Stator und einen relativ zum Stator drehenden Rotor aufweisen. Dabei weist der Rotor ein Paket beziehungsweise Blechpaket auf. Gemäß dem Stand der Technik werden diese Pakete üblicherweise aus mehreren Einzelblechen gefertigt, wobei die Einzelbleche mittels eines Stanzverfahrens hergestellt werden. Diese Einzelbleche weisen eine Mehrzahl von Nuten auf.

Bei Rotoren, welche als sogenannte Kurzschlussläufer oder Käfigläufer ausgebildet sind, werden in den Nuten entsprechende Leiter beziehungsweise Stäbe angeordnet. Dabei können diese Leiter mithilfe eines Druckgussverfahrens hergestellt werden. Hierbei ergibt sich insbesondere bei kleinen Maschinen mit kleinen Nuten die Problematik, dass die Rotorstäbe viele Lunker und damit quasi eine reduzierte Leiterfläche aufweisen. Hieraus ergibt sich eine relativ geringe Leitfähigkeit in den Rotorstäben. Dies hat wiederum zur Folge, dass der Wirkungsgrad und die Leistungsdichte der Asynchronmaschine sinken. Darüber hinaus ergibt sich der Nachteil, dass für den Druckgussprozess teure Werkzeuge benötigt werden.

Es ist Aufgabe der vorliegenden Erfindung, eine Lösung aufzuzeigen, wie ein Rotor für eine Asynchronmaschine auf kostengünstige Weise so hergestellt werden kann, dass ein effizienter Betrieb der Asynchronmaschine möglich ist.

Diese Aufgabe wird erfindungsgemäß durch ein Verfahren, durch einen Rotor sowie durch eine Asynchronmaschine gemäß den Merkmalen der unabhängigen Ansprüche gelöst. Vorteilhafte Weiterbildungen der vorliegenden Erfindung sind in den abhängigen Ansprüchen angegeben.

Ein erfindungsgemäßes Verfahren dient zum Herstellen eines Rotors für eine Asynchronmaschine. Das Verfahren umfasst das Herstellen einer Mehrzahl von Blechelementen aus einem weichmagnetischen Material, wobei die jeweiligen Blechelemente Nuten aufweisen. Zudem umfasst das Verfahren das Verbinden der Blechelemente zu einem Paket. Außerdem umfasst das Verfahren das Bereitstellen einer Mehrzahl von Leitern aus einem elektrisch leitfähigen Material, wobei die Leiter in den Nuten der Blechelemente angeordnet werden. Hierbei ist vorgesehen, dass die Blechelemente mittels eines Druckverfahrens aus einer ersten Suspension, welche das weichmagnetische Material umfasst, hergestellt werden. Darüber hinaus wird zum Bereitstellen der Leiter in die jeweiligen Nuten der Blechelemente ein Leiterelement eingebracht, wobei die jeweiligen Leiterelemente mittels eines Druckverfahrens aus einer zweiten Suspension, welche das elektrisch leitfähige Material umfasst, hergestellt werden.

Der Rotor kann für eine Asynchronmaschine verwendet werden. Insbesondere kann der Rotor also sogenannter Käfigläufer oder Kurzschlussläufer ausgebildet sein. Der Rotor umfasst die Mehrzahl von Blechelementen, welche aus dem weichmagnetischen Material gefertigt sind. Bei dem weichmagnetischen Material kann es sich um ein Metall, beispielsweise Eisen oder eine Legierung mit Eisen, handeln. Die jeweiligen Blechelemente können beispielsweise als kreisrunde Scheiben ausgebildet sein und in einem mittleren Bereich eine entsprechende Durchgangsöffnung aufweisen. Zudem umfassen die jeweiligen Blechelemente die Nuten, welche beispielsweise entlang einer Umfangsrichtung des jeweiligen Blechelements gleichmäßig beabstandet angeordnet sein können. Diese Nuten können auch durch Durchgangsöffnungen bereitgestellt werden. Gemäß dem Stand der Technik werden derartige Blechelemente üblicherweise durch ein Stanzverfahren aus einem Metallblech hergestellt. Im Gegensatz dazu ist es gemäß der vorliegenden Erfindung vorgesehen, dass die jeweiligen Blechelemente mittels eines Druckverfahrens aus der ersten Suspension hergestellt werden. Diese erste Suspension umfasst das weichmagnetische Material.

Die jeweiligen Blechelemente können dann übereinander angeordnet werden und somit ein üblicherweise verwendetes Blechpaket ersetzen. In den korrespondierenden Nuten der übereinander angeordneten Blechelemente beziehungsweise des Pakets befinden sich die Leiter. Um diese Leiter bereitstellen zu können, ist es vorgesehen, dass die Nuten der Blechelemente mit jeweiligen Leiterelementen gefüllt werden. Die korrespondierenden Leiterelemente der jeweiligen Blechelemente bilden zusammen einen Leiter des Rotors. Es ist vorgesehen, dass die Leiterelemente ebenfalls mittels eines Druckverfahrens aus der zweiten Suspension hergestellt werden. Diese zweite Suspension umfasst das elektrisch leitfähiges Material, beispielsweise Aluminium oder Kupfer. Im Anschluss daran können die korrespondierenden Leiterelemente der jeweiligen Blechelemente elektrisch miteinander verbunden werden, um die Leiter des Rotors bereitzustellen.

Somit können die Rotoraktivteile für die Asynchronmaschine vollständig mittels Druckverfahren hergestellt werden. Dies bedeutet insbesondere, dass keine Stanz- und Druckgusswerkzeuge benötigt werden. Dadurch können Einmalkosten gespart werden. Darüber hinaus wird es ermöglicht, dass elektrische Maschinen beziehungsweise Asynchronmaschinen in geringer Stückzahl wirtschaftlich gefertigt werden können. Zudem können Sondermaschinen mit kundenspezifischer Anpassung gefertigt werden. Außerdem werden durch die Druckverfahren beziehungsweise die Druckprozesse geringe Porositäten im Bereich der Leiterelemente beziehungsweise der elektrisch leitfähigen Leiter erreicht. Dadurch können die Wirkungsgrade verbessert werden und die Leistungsdichten erhöht werden. Zudem ermöglichen die Druckverfahren einen Aufbau mit vielen kleinen Nuten, die in einem Druckgussprozess nicht gefüllt werden könnten.

Bevorzugt werden die jeweiligen Blechelemente und/oder die jeweiligen Leiterelemente mittels eines Siebdruckverfahrens hergestellt. Insbesondere wird ein sogenanntes dreidimensionales Siebdruckverfahren verwendet, um sowohl die Blechelemente als auch die Leiterelemente zu fertigen. Um die jeweiligen Blechelemente herzustellen, kann zunächst ein entsprechendes Sieb gefertigt werden. Im Anschluss daran kann der Siebdruckprozess zum Herstellen der Blechelemente durchgeführt werden. Hierzu wird die erste Suspension genutzt, welche das weichmagnetische Material umfasst. Bei der ersten Suspension kann es sich um eine pulverbasierte Suspension handeln, welche zusätzlich ein Bindermaterial, ein Lösemittel und/oder Additive umfassen kann. Zum Drucken der jeweiligen Blechelemente kann eine Flutrakel und/oder eine Druckrakel verwendet werden. In gleicher Weise können die jeweiligen Leiterelemente in die Nuten beziehungsweise Öffnungen der jeweiligen Blechelemente mittels eines Siebdruckverfahrens eingebracht werden. Hierzu wird die zweite Suspension verwendet, welche das elektrisch leitfähige Material umfasst. Es kann also ein Zwei-Komponenten-Blech gedruckt werden. Durch die Verwendung des Siebdruckverfahrens für die Herstellung der Blechpakete sowie der Leiterelemente in den Nuten der Blechpakete kann eine zuverlässige Füllung der Nuten mit geringen Porositäten erreicht werden.

Gemäß einer weiteren Ausführungsform werden die Blechelemente zusammen mit den in die jeweiligen Nuten eingebrachten Leiterelementen thermisch behandelt. Zunächst kann das Siebdruckverfahren durchgeführt werden, bei dem die jeweiligen Blechelemente hergestellt werden und die Leiterelemente in die Nuten der Blechelemente eingebracht werden. Im Anschluss daran können die jeweiligen Blechelemente zusammen mit den eingebrachten Leiterelementen thermisch behandelt beziehungsweise erwärmt werden. Insbesondere ist vorgesehen, dass zunächst eine Entbinderung durchgeführt wird. Somit können die Binder und/oder Additive der jeweiligen Suspensionen entfernt werden. Im Anschluss daran kann bevorzugt eine Sinterung durchgeführt werden. Dabei kann eine Temperaturbehandlung vorgesehen sein, wobei die Temperatur unterhalb der Schmelztemperatur des weichmagnetischen Materials und des elektrisch leitfähigen Materials liegt. Insbesondere ist es vorgesehen, dass durch die Temperaturbehandlung eine stoffschlüssige Verbindung zwischen den Blechelementen und den in den Nuten angeordneten Leiterelementen erfolgt. Der metallische Stoffschluss zwischen den elektrisch leitenden Bereichen und den weichmagnetischen Bereichen führt zu Elementen mit einer hohen Festigkeit. Damit kann der Rotor hohen Drehzahlen standhalten, was wiederum zu einem Leistungsvermögen der elektrischen Maschine führt.

In einer Ausführungsform wird auf die jeweiligen Blechelemente eine elektrisch isolierende Isolationsschicht aufgebracht und die Blechelemente werden anschließend zu dem Paket verbunden. Die jeweiligen Blechelemente werden also bis auf die Bereiche der Nuten beziehungsweise die darin angeordneten Leiterelemente elektrisch zueinander isoliert, bevor diese übereinander angeordnet werden. Beispielsweise kann ein entsprechend elektrisch isolierender Lack verwendet werden, der auf die Blechelemente aufgebracht wird. Darüber hinaus kann es vorgesehen sein, dass ein elektrisch isolierendes Material auf die Blechelemente aufgedruckt wird. Gemäß einer alternativen Ausführungsform können Elemente aus einem elektrisch isolierenden Material zwischen den benachbarten Blechelementen angeordnet werden. Somit kann insgesamt auf einfache und zuverlässige Weise eine zuverlässige elektrische Isolierung zwischen den Blechelementen erreicht werden und somit die Ausbildung von Wirbelströmen innerhalb des Pakets verhindert werden.

Gemäß einer weiteren Ausführungsform werden die Blechelemente mit in den jeweiligen Nuten eingebrachten Leiterelementen in axialer Richtung des Rotors übereinander angeordnet. Um das Paket bereitzustellen, werden die Blechelemente mit den aufgefüllten Nuten übereinander angeordnet. Wie bereits erläutert, ist es insbesondere vorgesehen, dass benachbarte Blechelemente elektrisch zueinander isoliert werden. Die jeweiligen Blechelemente werden also zu einem Stapel geschichtet. Zudem können die Blechelemente miteinander mechanisch verbunden werden. Dies ermöglicht eine einfache und kostengünstige Fertigung des Pakets.

In einer weiteren Ausführungsform werden zum Bereitstellen der Leiter korrespondierende Leiterelemente der übereinander angeordneten Blechelemente durch eine thermische Behandlung elektrisch miteinander verbunden. Die jeweiligen Blechelemente mit den gefüllten Nuten können so übereinander angeordnet werden, dass sich die korrespondierenden Leiterelementen der jeweiligen Blechelemente zumindest bereichsweise überlappen. Um die jeweiligen Leiter bereitzustellen, ist es erforderlich, dass die korrespondierenden beziehungsweise übereinander liegenden Leiterelemente elektrisch und mechanisch miteinander verbunden werden. Zu diesem Zweck können die jeweiligen Leiterelemente erwärmt beziehungsweise thermisch behandelt werden. Hierzu kann eine entsprechende Heizvorrichtung verwendet werden. Es kann auch vorgesehen sein, dass die korrespondierenden Leiterelemente, welche im mechanischen und elektrischen Kontakt miteinander sind, mit einem elektrischen Strom beaufschlagt werden, um diese zu erwärmen. Durch die Erwärmung der korrespondierenden Leiterelemente kann insbesondere erreicht werden, dass diese stoffschlüssig miteinander verbunden werden. Zudem können die jeweiligen Leiterelemente elektrisch miteinander verbunden werden. Durch die verbundenen, korrespondierenden Leiterelemente werden dann die Leiter bereitgestellt, welche die Aufgabe von Kurzschlussstäben in den Rotor der Asynchronmaschine erfüllen.

Weiterhin ist vorteilhaft, wenn die übereinander angeordneten Blechelemente jeweils um einen vorbestimmten Winkel in Umfangsrichtung des Rotors zueinander gedreht angeordnet werden. Bei dem Anordnen der jeweiligen, mit den Leiterelementen gefüllten Blechelemente können diese um einen vorbestimmten Winkel beziehungsweise leicht verdreht zueinander angeordnet werden. Beispielsweise können die jeweiligen Blechelemente entlang der Umfangsrichtung in der gleichen Drehrichtung jeweils um den vorbestimmten Winkel zueinander verdreht angeordnet sein. Dabei ist der Winkel bevorzugt so zu bestimmen, dass sich die Leiterelemente von benachbarten Blechelementen zumindest überwiegend überlappen. Durch die Verdrehung der übereinander angeordneten Blechelemente kann eine Schrägung der Leiter erreicht werden. Durch diese Schrägung der Leiter, welche die Aufgabe der Kurzschlussstäbe erfüllen, können Rastmomente im Betrieb der Asynchronmaschine auf zuverlässige Weise verhindert werden.

Bei einer weiteren Ausführungsform wird an einer Oberseite und einer Unterseite des Pakets jeweils ein Kurzschlussringelement zum elektrischen Verbinden der jeweiligen Leiter angeordnet. Dabei kann an der Unterseite des Pakets beziehungsweise an dem untersten Blechelement sowie an der Oberseite des Pakets beziehungsweise an dem obersten Blechelement jeweils ein Kurzschlussringelement angebracht werden. Dieses Kurzschlussringelement kann im Wesentlichen ringförmig beziehungsweise hohlzylinderförmig ausgebildet sein. Mit den jeweiligen Kurzschlussringelementen können die jeweiligen Leiter, die durch die verbundenen Leiterelemente gebildet werden, an der Oberseite und an der Unterseite jeweils elektrisch miteinander verbunden beziehungsweise kurzgeschlossen werden.

Dabei können die Kurzschlussringe ebenfalls mittels eines Druckverfahrens, insbesondere mittels eines Siebdruckverfahrens hergestellt werden. In diesem Fall können die Kurzschlussringelemente ebenfalls aus der zweiten Suspension hergestellt werden. Im Anschluss daran eine Entbinderung und eine Sinterung durchgeführt werden. Alternativ dazu kann es vorgesehen sein, dass die Kurzschlussringelemente additiv auf das Paket aufgebracht werden. Beispielsweise können die Kurzschlussringelemente zunächst als separates Bauteil hergestellt werden und anschließend können die Kurzschlussringelemente mechanisch und elektrisch mit dem Paket verbunden werden.

Ein erfindungsgemäßer Rotor für eine Asynchronmaschine umfasst eine Mehrzahl von Blechelementen aus einem weichmagnetischen Material, wobei die jeweiligen Blechelemente Nuten aufweisen und wobei die Blechelemente zu einem Paket verbunden sind. Zudem umfasst der Rotor eine Mehrzahl von Leitern aus einem elektrisch leitfähigen Material, wobei die Leiter in den Nuten der Blechelemente angeordnet sind. Dabei ist vorgesehen, dass die Blechelemente mittels eines Druckverfahrens aus einer ersten Suspension, welche das weichmagnetische Material umfasst, hergestellt sind. Zudem ist zum Bereitstellen der Leiter in die jeweiligen Nuten der Blechelemente ein Leiterelement eingebracht, wobei die jeweiligen Leiterelemente mittels eines Druckverfahrens aus einer zweiten Suspension, welche das elektrisch leitfähige Material umfasst, hergestellt sind.

Der erfindungsgemäße Rotor ist also mittels des erfindungsgemäßen Verfahrens und der vorteilhaften Ausgestaltung davon hergestellt. Dabei ist insbesondere bei den jeweiligen Blechelementen eine stoffschlüssige Verbindung zwischen dem Blechelement und den Leiterelementen, die in den Nuten des Blechelements angeordnet sind, vorhanden. Zudem sind sowohl die jeweiligen Blechelemente als auch die darin angeordneten Leiterelemente mittels des Druckverfahrens, insbesondere mittels eines Siebdruckverfahrens, hergestellt. Auch die korrespondierenden Leiterelemente sind stoffschlüssig miteinander zu den Leitern verbunden.

Eine erfindungsgemäße Asynchronmaschine umfasst einen erfindungsgemäßen Rotor sowie einen Stator. Die Asynchronmaschine kann insbesondere als Drehstrom-Asynchronmaschine ausgebildet sein. Der Stator kann entsprechende Wicklungen aufweisen, mit dem ein Drehfeld erzeugt werden kann.

Die mit Bezug auf das erfindungsgemäße Verfahren vorgestellten bevorzugten Ausführungsformen und deren Vorteile gelten entsprechend für den erfindungsgemäßen Rotor sowie für die erfindungsgemäße Asynchronmaschine.

Weitere Merkmale der Erfindung ergeben sich aus den Ansprüchen, den Figuren und der Figurenbeschreibung. Die vorstehend in der Beschreibung genannten Merkmale und Merkmalkombinationen sowie die nachfolgend in der Figurenbeschreibung genannten und/oder in den Figuren alleine gezeigte Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine schematische Darstellung einer Asynchronmaschine, welche einen Stator sowie einen Rotor aufweist;
- FIG 2: ein Blechelement des Rotors, welches eine Mehrzahl von Nuten aufweist;
- FIG 3: das Blechelement gemäß FIG 2, wobei in die jeweiligen Nuten des Blechelements Leiterelemente eingebracht sind;
- FIG 4: eine Mehrzahl von Blechelementen mit in den Nuten angeordneten Leiterelementen, welche übereinander zu einem Paket angeordnet sind; und
- FIG 5: das Paket gemäß FIG 4, wobei auf einer Oberseite und einer Unterseite des Pakets ein Kurzschlussringelement angeordnet ist.

In den Figuren werden gleiche oder funktionsgleiche Elemente mit den gleichen Bezugszeichen versehen.

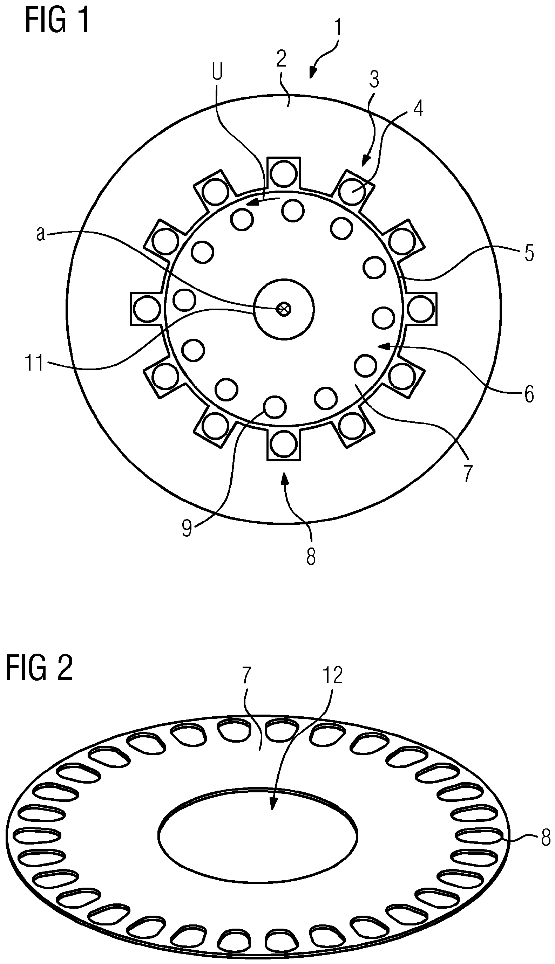

FIG 1 zeigt in einer schematischen Schnittdarstellung eine Asynchronmaschine 1 gemäß einer Ausführungsform der vorliegenden Erfindung. Die Asynchronmaschine 1 umfasst einen Stator 2, welcher eine Mehrzahl von Nuten 3 aufweist. In den jeweiligen Nuten 3 sind vorliegend nur schematisch dargestellte Wicklungen 4 angeordnet. Mithilfe des Stators 2 kann ein

Drehfeld erzeugt werden, welches auf einen Rotor 5 der Asynchronmaschine 1 wirkt. Der Rotor 5 umfasst ein Paket 6, welches eine Mehrzahl von Blechelementen 7 umfasst. Die jeweiligen Blechelemente 7 umfassen Nuten 8, in welche jeweils Leiter 9 eingebracht sind. Wie nachfolgend näher erläutert sind die jeweiligen Leiter 9 elektrisch miteinander verbunden. Der Rotor 5 ist nach Art eines Kurzschlussläufers ausgebildet.

FIG 2 zeigt in einer Perspektivansicht ein einzelnes Blechelement 7 des Rotors 5. Das Blechelement 7 ist im Wesentlich scheibenförmig ausgebildet und umfasst eine Mehrzahl von Nuten 8. Dieses Blechelement 7 wird mittels eines Druckverfahrens, insbesondere eines Siebdruckverfahrens, aus einer ersten Suspension hergestellt. Diese erste Suspension kann ein weichmagnetisches Material in Pulverform umfassen. Das weichmagnetische Material kann beispielsweise Eisen, Kobalt, Nickel und/oder eine Legierung dieser Materialien umfassen. Zudem kann es sich bei dem weichmagnetischen Material um einen keramischen Werkstoff handeln. Die erste Suspension kann neben dem pulverförmigen weichmagnetischen Werkstoff ein Bindermaterial, ein Lösemittel und/oder Additive umfassen. Bei dem Siebdruckverfahren kann das Sieb so hergestellt werden, dass sich die Formgebung des Blechelements 7 mit den Nuten 8 ergibt. Vorliegend sind die Nuten 8 als Durchgangsöffnungen ausgebildet, welche sich durch die komplette Dicke des Blechelements 7 erstrecken. Ferner sind die Nuten 8 entlang einer Umfangsrichtung U des Rotors 5 gleichmäßig beabstandet zueinander angeordnet. Zudem weist das Blechelement 7 an dem mittleren Bereich eine Durchgangsöffnung 12 auf, welche zur Aufnahme einer Welle 11 des Rotors 5 dient.

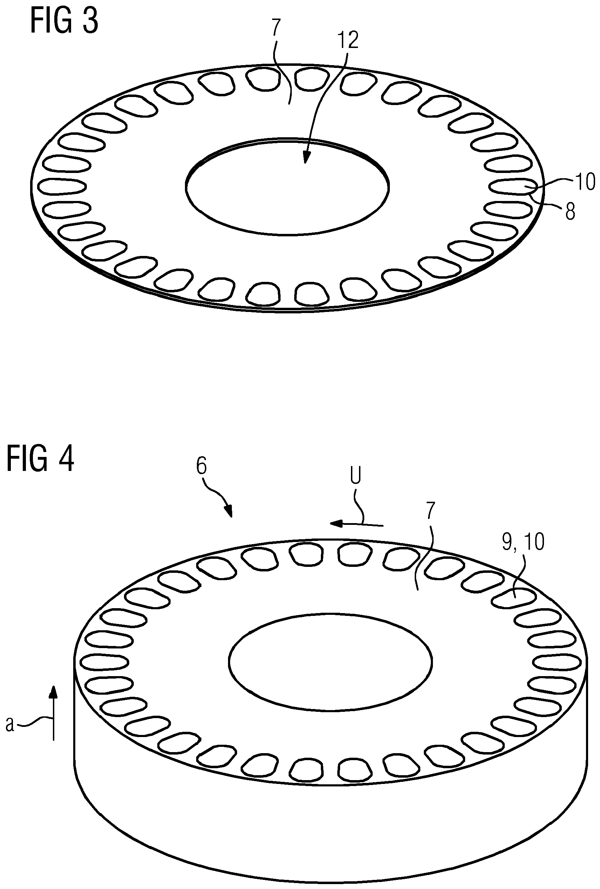

FIG 3 zeigt das Blechelement 7 gemäß FIG 2, wobei in die jeweiligen Nuten 8 ein Leiterelement 10 eingebracht ist. Mit anderen Worten sind die jeweiligen Nuten 8 mit den Leiterelementen 10 gefüllt. Zum Herstellen der jeweiligen Leiterelemente 8 wird ebenfalls ein Druckverfahren, insbesondere ein Siebdruckverfahren, verwendet. Dabei werden die Leiterelemente 10 aus einer zweiten Suspension, welche ein elektrisch leitfähiges Material umfasst, hergestellt. Bei dem elektrisch leitfähigen Material kann es sich beispielsweise um Kupfer oder Aluminium handeln. Somit wird insgesamt ein Zweikomponenten-Blech hergestellt, welches Blechelement 7 sowie die in die Nuten 8 eingebrachten Leiterelemente 10 umfasst.

Im Anschluss an die Druckverfahren können die einzelnen Materialien selbst und untereinander durch einen thermischen Prozess verfestigt und verbunden werden. Insbesondere werden eine Entbinderung und eine Sinterung durchgeführt. Hierdurch ergibt sich eine stoffschlüssige Verbindung zwischen dem Blechelement 7 und den jeweiligen Leiterelementen 10. Im Anschluss daran können die jeweiligen Blechelemente 7 bis auf die Nutbereiche beziehungsweise die Leiterelemente 10 gegeneinander isoliert werden. Hierzu kann auf das Blechelement 7 eine entsprechende Isolationsschicht aufgebracht werden.

FIG 4 zeigt eine Mehrzahl von Blechelementen 7 mit in den Nuten 8 angeordneten Leiterelementen 10, welche entlang einer axialen Richtung a des Rotors 5 übereinander angeordnet sind. Dabei bilden die übereinander angeordneten Blechelemente 7 das Paket 6. Dabei werden die jeweiligen Blechelemente 7 derart übereinander angeordnet, dass sich korrespondierende Leiterelemente 10 zumindest bereichsweise überlappen. Insbesondere ist es vorgesehen, dass die Schichtung derart erfolgt, dass die gefüllten Nutbereiche beziehungsweise die Leiterelemente 10 in einer definierten Lage übereinander liegen. Beispielsweise können die jeweiligen Blechelemente 7 um einen vorbestimmten Winkel entlang der Umfangsrichtung U des Rotors 5 zueinander verdreht angeordnet sein. Somit lässt sich bei den Leitern 8, welche durch die korrespondierenden und verbundenen Leiterelemente 10 gebildet werden, eine Schrägung erzielen. Um die jeweiligen korrespondierenden Leiterelemente 10 mechanisch und elektrisch miteinander zu verbinden, können diese einem thermischen Prozess unterzogen werden. Somit können durch die jeweiligen Leiter 9 die Kurzschlussstäbe des Rotors 5 bereitgestellt werden.

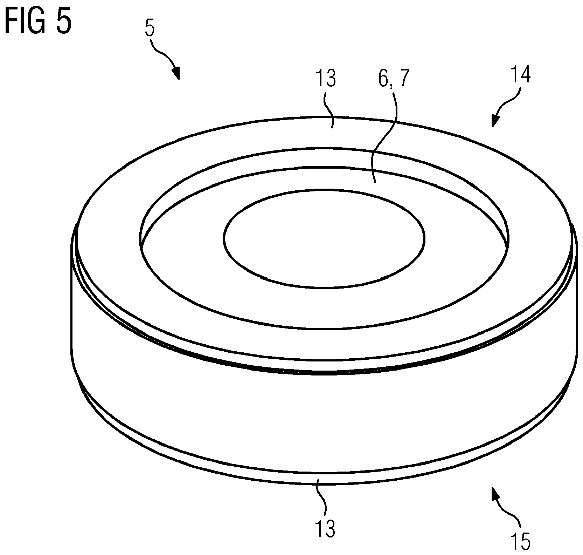

FIG 5 zeigt den Rotor 5 der Asynchronmaschine 1 in einer Perspektivansicht. Hierbei ist zu erkennen, dass sich an einer Oberseite 14 des Pakets 6 sowie an einer Unterseite 15 des Pakets 6 jeweils ein Kurzschlussringelement 13 angeordnet ist. Die jeweiligen Kurzschlussringelemente 16 sind aus einem elektrisch leitfähigen Material gebildet oder ringförmig ausgestaltet. Mit den Kurzschlussringelementen 16 können die jeweiligen Leiter 9 an der Oberseite 14 und an der Unterseite 15 des Pakets 6 elektrisch miteinander verbunden werden. Die jeweiligen Kurzschlussringelemente 13 können ebenfalls mittels eines Druckverfahrens, insbesondere eines Siebdruckverfahrens, hergestellt werden. Die Kurzschlussringelemente 13 können hierbei aus der zweiten Suspension hergestellt werden. Es kann auch vorgesehen sein, dass die Kurzschlussringelemente 13 separat gefertigt werden und additiv auf das Paket 6 aufgebracht werden.

Somit kann der komplette Rotor 5 für die Asynchronmaschine 1 mittels eines Druckverfahrens hergestellt werden. Somit ist es nicht erforderlich, entsprechende Stanzwerkzeuge oder Druckgusswerkzeuge bereitzustellen. Auf diese Weise können Asynchronmaschinen 1 in geringer Stückzahl oder nach spezifischem Kundenwunsch gefertigt werden. Durch den Druckprozess können geringe Porositäten im Bereich der Leiter 9 erreicht werden, wodurch die Wirkungsgrade verbessert werden und die Leistungsdichten erhöht werden. Zudem ergibt sich durch den metallischen Stoffschluss zwischen den Leitern 9 sowie den einzelnen Blechelementen 7 eine hohe Festigkeit. Damit kann der Rotor 5 hohen Drehzahlen standhalten, was zu hohem Leistungsvermögen der Asynchronmaschine 1 führt.

## Patentansprüche

1. Verfahren zum Herstellen eines Rotors (5) für eine Asynchronmaschine (1) mit den Schritten:
- Herstellen einer Mehrzahl von Blechelementen (7) aus einem weichmagnetischen Material, wobei die jeweiligen Blechelemente (7) Nuten (8) aufweisen,
- Verbinden der Blechelemente (7) zu einem Paket (6) und
- Bereitstellen einer Mehrzahl von Leitern (9) aus einem elektrisch leitfähigen Material, wobei die Leiter (9) in den Nuten (8) der Blechelemente (7) angeordnet werden, **dadurch gekennzeichnet, dass**
- die Blechelemente (7) mittels eines Druckverfahrens aus einer ersten Suspension, welche das weichmagnetische Material umfasst, hergestellt werden und
- zum Bereitstellen der Leiter (9) in die jeweiligen Nuten (8) der Blechelemente (7) ein Leiterelement (10) eingebracht wird,
- wobei die jeweiligen Leiterelemente (10) mittels eines Druckverfahrens aus einer zweiten Suspension, welche das elektrisch leitfähige Material umfasst, hergestellt werden.

2. Verfahren nach Anspruch 1, **dadurch gekennzeichnet, dass** die jeweiligen Blechelemente (7) und/oder die jeweiligen Leiterelemente (10) mittels eines Siebdruckverfahrens hergestellt werden.

3. Verfahren nach Anspruch 1 oder 2, **dadurch gekennzeichnet, dass** die Blechelemente (7) zusammen mit den in die jeweiligen Nuten (8) eingebrachten Leiterelementen (10) thermisch behandelt werden.

4. Verfahren nach einem der vorhergehenden Ansprüche, **dadurch gekennzeichnet, dass** auf die jeweiligen Blechelemente (7) eine elektrisch isolierende Isolationsschicht aufgebracht wird und die Blechelemente (7) anschließend zu dem Paket (6) verbunden werden.

5. Verfahren nach einem der vorhergehenden Ansprüche, **dadurch gekennzeichnet**, die Blechelemente (7) mit den in den jeweiligen Nuten (8) eingebrachten Leiterelementen (10) in axialer Richtung (a) des Rotors (5) übereinander angeordnet werden.

6. Verfahren nach Anspruch 5, **dadurch gekennzeichnet, dass** zum Bereitstellen der Leiter (9) korrespondierende Leiterelemente (10) der übereinander angeordneten Blechelemente (7) durch eine thermische Behandlung elektrisch miteinander verbunden werden.

7. Verfahren nach Anspruch 5 oder 6, **dadurch gekennzeichnet, dass** die übereinander angeordneten Blechelemente (7) jeweils um einen vorbestimmten Winkel in Umfangsrichtung (U) des Rotors (5) zueinander gedreht angeordnet werden.

8. Verfahren nach einem der vorhergehenden Ansprüche, **dadurch gekennzeichnet, dass** an einer Oberseite (14) und einer Unterseite (15) des Pakets (6) jeweils ein Kurzschlussringelement (13) zum elektrischen Verbinden der jeweiligen Leiter (9) angeordnet wird.

9. Verfahren nach Anspruch 8, **dadurch gekennzeichnet, dass** die Kurzschlussringelemente (13) mittels eines Druckverfahrens hergestellt werden oder als separates Bauteil bereitgestellt werden.

10. Rotor (5) für eine Asynchronmaschine (1) umfassend:
- eine Mehrzahl von Blechelementen (7) aus einem weichmagnetischen Material,
- wobei die jeweiligen Blechelemente (7) Nuten (8) aufweisen, und
- wobei die Blechelemente (7) zu einem Paket (6) verbunden sind, und
- einer Mehrzahl von Leitern (9) aus einem elektrisch leitfähigen Material, wobei die Leiter (9) in den Nuten (8) der Blechelemente (7) angeordnet sind,
**dadurch gekennzeichnet, dass**
- die Blechelemente (7) mittels eines Druckverfahrens aus einer ersten Suspension, welche das weichmagnetischen Material umfasst, hergestellt sind und
- zum Bereitstellen der Leiter (9) in die jeweiligen Nuten (8) der Blechelemente (7) ein Leiterelement (10) eingebracht ist,
- wobei die jeweiligen Leiterelemente (10) mittels eines Druckverfahrens aus einer zweiten Suspension, welche das elektrisch leitfähige Material umfasst, hergestellt sind.

11. Asynchronmaschine (1) mit einem Rotor (5) nach Anspruch 10 und mit einem Stator (2).
